(19)

Europäisches
Patentamt
European
Patent Office
Office européen
des brevets

(11)  **EP 4 530 971 A1**

(12)  **EUROPEAN PATENT APPLICATION**

(43) Date of publication:
**02.04.2025  Bulletin 2025/14**

(21) Application number: **24201247.4**

(22) Date of filing: **19.09.2024**

(51) International Patent Classification (IPC):
*G06T 5/60* *(2024.01)*

(52) Cooperative Patent Classification (CPC):
**G06T 5/60;** G06T 2207/20081; G06T 2207/20084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.09.2023  JP 2023161713**

(71) Applicant: **CANON KABUSHIKI KAISHA
Tokyo 146-8501 (JP)**

(72) Inventor: **HIASA, Norihito
Tokyo (JP)**

(74) Representative: **WESER & Kollegen
Patentanwälte PartmbB
Radeckestraße 43
81245 München (DE)**

(54)  **IMAGE PROCESSING METHOD, IMAGE PROCESSING APPARATUS, IMAGE PICKUP APPARATUS, AND PROGRAM**

(57)    An image processing method generates a first residual image (231) based on a first image (221) using a machine learning model, and a third image (223) based on a fourth image (224) and an absolute value of the first residual image. The fourth image is the first image or an image based on the first image. Where a second image is a sum of the fourth and first residual images, a signal value of each pixel in the third image to a value is set a value closer to a signal value of a pixel in the fourth image corresponding to each pixel in the third image than a signal value of a pixel in the second image as a non-zero absolute value of a signal value in the first residual image decreases.

```
                    ┌─────────┐
                    │  START  │
                    └────┬────┘
                         │
S201     ┌───────────────▼───────────────┐
         │      ACQUIRE FIRST IMAGE       │
         └───────────────┬───────────────┘
                         │
S202     ┌───────────────▼───────────────┐
         │  GENERATE FIRST RESIDUAL IMAGE │
         │  USING MACHINE LEARNING MODEL  │
         └───────────────┬───────────────┘
                         │
S203     ┌───────────────▼───────────────┐
         │ GENERATE SECOND RESIDUAL IMAGE │
         │  USING NONLINEAR PROCESSING    │
         │  BASED ON ABSOLUTE VALUE OF    │
         │      FIRST RESIDUAL IMAGE      │
         └───────────────┬───────────────┘
                         │
S204     ┌───────────────▼───────────────┐
         │   GENERATE THIRD IMAGE BY      │
         │  CALCULATING SUM OF FOURTH     │
         │ IMAGE AND SECOND RESIDUAL      │
         │           IMAGE                │
         └───────────────┬───────────────┘
                         │
                    ┌────▼────┐
                    │   END   │
                    └─────────┘
```

FIG. 6

EP 4 530 971 A1

**Description**

BACKGROUND

Technical Field

One of the aspects of the embodiments relates to an image processing method, an image processing apparatus, and a storage medium (program), each of which estimates an image using a machine learning model.

Description of Related Art

Japanese Patent Laid-Open No. 2022-536807 discloses a method for generating an upsampled high-resolution image from a low-resolution image using a neural network (NN). The NN acquires a high-resolution residual image by generating a plurality of high-resolution residual sub-images and by rearranging these pixels. A high-resolution image with a high resolving sense is then generated by summing up a base high-resolution image obtained by bicubic-upsampling the low-resolution image and the high-resolution residual image.

However, the method disclosed in Japanese Patent Laid-Open No. 2022-536807 has a problem in that unintended luminance changes unrelating to the upsampling occur in the high-resolution image. For example, periodic patterns may occur in the high-resolution image. The principle of this problem will be described later.

SUMMARY

The present disclosure in its first aspect provides an image processing method as specified in claims 1 to 15.

The present disclosure in its second aspect provides a program as specified in claim 16.

The present disclosure in its third aspect provides an image processing apparatus as specified in claim 17.

The present disclosure in its fourth aspect provides an image pickup apparatus as specified in claim 18.

Further features of various embodiments of the disclosure will become apparent from the following description of embodiments with reference to the attached drawings.

BRIEF DESCRIPTION OF THE DRAWINGS

FIG. 1 illustrates a flow of generating a third image in Example 1.

FIG. 2 is a block diagram illustrating the configuration of an image processing system according to Example 1.

FIG. 3 is an external view of an image processing system according to Example 1.

FIG. 4 is a flowchart illustrating the training of a machine learning model in Examples 1 and 2.

FIGs. 5A and 5B illustrate the configuration of the machine learning model in Example 1.

FIG. 6 is a flowchart illustrating generating processing of the third image according to Example 1.

FIGs. 7A, 7B, and 7C illustrate an example of nonlinear processing according to Example 1.

FIG. 8 is a block diagram illustrating the configuration of an image processing system according to Example 2.

FIG. 9 is an external view of an image processing system according to Example 2.

FIG. 10 illustrates the configuration of the machine learning model in Example 2.

FIG. 11 illustrates a flow of generating the third image in Example 2.

FIG. 12 is a flowchart illustrating generating processing of the third image according to Example 2.

FIGs. 13A and 13B illustrate an example of nonlinear processing according to Example 2.

DESCRIPTION OF THE EMBODIMENTS

In the following, the term "unit" may refer to a software context, a hardware context, or a combination of software and hardware contexts. In the software context, the term "unit" refers to a functionality, an application, a software module, a function, a routine, a set of instructions, or a program that can be executed by a programmable processor such as a microprocessor, a central processing unit (CPU), or a specially designed programmable device or controller. A memory contains instructions or programs that, when executed by the CPU, cause the CPU to perform operations corresponding to units or functions. In the hardware context, the term "unit" refers to a hardware element, a circuit, an assembly, a physical structure, a system, a module, or a subsystem. Depending on the specific embodiment, the term "unit" may include mechanical, optical, or electrical components, or any combination of them. The term "unit" may include active (e.g., transistors) or passive (e.g., capacitor) components. The term "unit" may include semiconductor devices having a substrate and other layers of materials having various concentrations of conductivity. It may include a CPU or a programmable processor that can execute a program stored in a memory to perform specified functions. The term "unit" may include logic elements (e.g., AND, OR) implemented by transistor circuits or any other switching circuits. In the combination of software and hardware contexts, the term "unit" or "circuit" refers to any combination of the software and hardware contexts as described above. In addition, the term "element," "assembly," "component," or "device" may also refer to "circuit" with or without integration with packaging materials.

Referring now to the accompanying drawings, a description will be given of embodiments according to the disclosure. A description will now be given of an overview of the embodiment before details of the embodiment are described.

In training a machine learning model configured to perform image estimation, a difference between an estimated image and a desired ground truth image is expressed by a loss function such as Mean Square Error (MSE). By minimizing a value of the loss function, a plurality of model parameters of the machine learning model (weights and biases of each layer, etc.: simply referred to as model parameters hereinafter) are determined. In general, in an image estimation task, a solution is not uniquely determined for input data, so even if a loss function is minimized, the value of the loss function does not become 0, and a finite error remains. For example, in a case where the task is to correct image blur, a uncorrected or overcorrected component of the blur remain as a finite value of the loss function even after training. Blur affects an area where a structure such as an edge exists, but does not change the image appearance in a flat area where a signal does not change. In other words, a desired behavior of a machine learning model configured to correct blur is to not change a signal value in a flat area of an image.

However, image processing using a machine learning model can generate luminance and color changes that do not actually exist in the flat area of the estimated image. In a case where that change is sufficiently small in the order of magnitude of the loss function than the (above blur correction residue and overcorrection) components relating to the task, the change remains even after minimization. Thereby, unintended changes in luminance and color unrelating to the task occur in image estimation using the machine learning model.

To suppress this change, this example uses an absolute value of the first residual image (blur correction component in a case where the task is blur correction) generated using the machine learning model. In this embodiment, the residual image is an image generated in a residual block including a skip connection and is added to an input image to the residual block. Since unintended luminance and color changes a little influence on the loss function, the absolute value of the residual is inevitably small. Therefore, by weakening the influence of pixels with the small absolute value in the first residual image, an estimated image (third image) in which unintended luminance and color changes are suppressed can be obtained. Specific examples of the method will be described in Examples 1 and 2 below.


EXAMPLE 1

An image processing system according to Example 1 will be described. The task performed by the machine learning model in Example 1 is upsampling (resolution improving processing). Example 1 upsamples the entire image, but may trim a portion of the image and upsample it, like digital zoom.

Similar effects can be obtained for tasks other than upsampling. Examples of the other tasks include degradation correcting, contrast improving, demosaicing, dynamic range expanding, gradation increasing, lighting changing, changing a defocus blur shape, focus distance changing, depth of field changing, etc. Degradation here refers to blur, noise, haze, turbulence (air fluctuation), etc. Blur includes aberration, diffraction, defocus blur, and shaking of an optical system. Noise includes noise generated by an image sensor and noise generated by data compression. Changing the defocus blur shape includes changing a blurred image with double line blur to a blurred image with a flat light amount distribution in a defocus area of an image, changing a blurred image with a chipped shape due to vignetting to a circularly blurred image, etc.

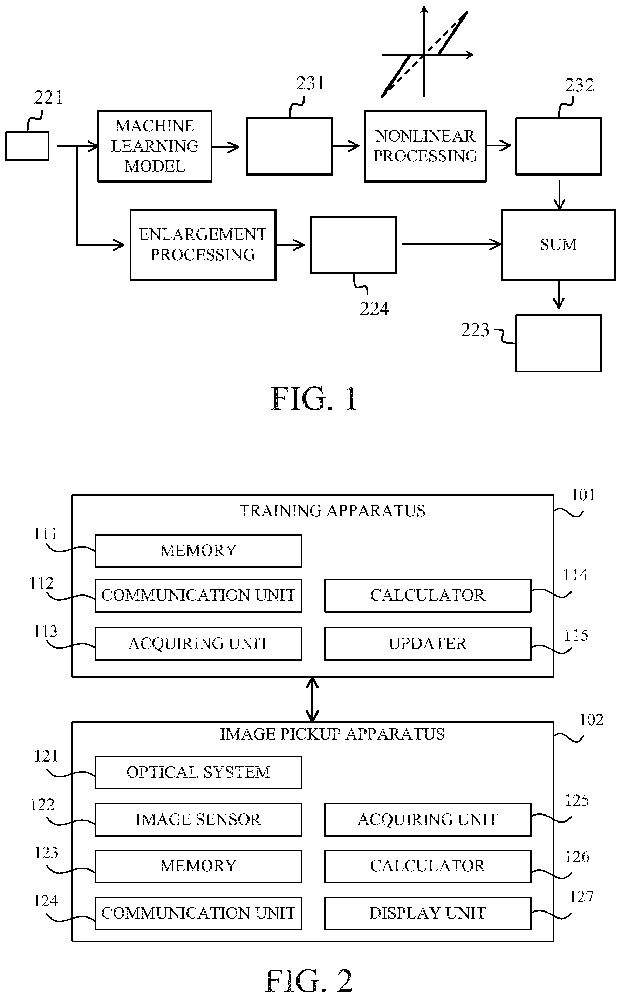

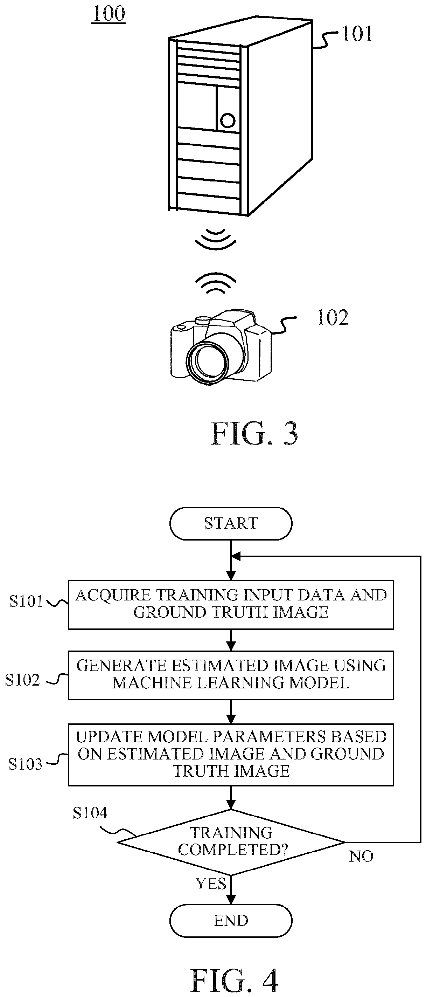

FIG. 2 illustrates the configuration of the image processing system 100 according to Example 1. FIG. 3 illustrates the external appearance of the image processing system 100. The image processing system 100 includes a training apparatus 101, and an image pickup apparatus 102.

The image pickup apparatus 102 includes an optical system 121, an image sensor 122, a memory 123, a communication unit 124, an acquiring unit 125, a calculator 126, and a display unit 127. The optical system 121 condenses light incident from object space to form an object image. The image sensor 122 receives the object image and performs photoelectric conversion to generate a captured image.

The calculator 126 performs predetermined image processing for the captured image generated by the image sensor 122. The memory 123 stores the captured image after image processing.

The calculator 126 generates an output image (corresponding to a third image described later) by upsampling using a machine learning model for the captured image (corresponding to a first image described later) generated by the image sensor 122 as an input image.

The captured image to be upsampled may be an undeveloped raw image or a developed image, but this example upsamples a luminance component of the developed image. Upsampling may be performed automatically in capturing an image, or may be performed at any timing designated by the user for the captured image that has been stored.

The model parameters of the machine learning model have been previously trained by the training apparatus 101, previously acquired the image pickup apparatus 102 via the communication unit 112 of the training apparatus 101 and the communication unit 124 of the image pickup apparatus 102, and stored in the memory 123. Details regarding training of the machine learning model and upsampling by the trained machine learning model will be described later. An output image generated by upsampling is displayed on the display unit 127, and is stored in the memory 123.

Referring to a flowchart of FIG. 4, a description will be given of a method for training the machine learning model (a method for determining model parameters) executed by the training apparatus 101. The training apparatus 101, which is configured by a computer, has a memory 111, a communication unit 112, an acquiring unit 113, a calculator 114, and an updater 115. The acquiring unit 113, the calculator 114, and the updater 115 execute the following processing (processing steps and update steps) according to a (computer) program. The acquiring unit 113 and the calculator 114 constitute a processing unit, and the updater 115 corresponds to an updating unit.

In step S101, the acquiring unit 113 acquires one or more sets of training input data and a ground truth image from the memory 111. The training input data is data to be input to the machine learning model during training. The training input data in Example 1 is a low-resolution image (input image for training). However, the training input data may include another image and a map in addition to the low-resolution image. For example, it may include a map indicating the intensity of degradation (noise, etc.) acting on the low-resolution image. The case where a map is included will be explained in Example 2.

The low-resolution image has the number of pixels $(h, w, c)$ in the vertical, horizontal, and channel directions. Example 1 upsamples only the luminance component, and thus $c=1$. In a case where there are a plurality of color components, for example, in a case where there are three color components RGB (Red, Green, Blue), $c=3$.

The ground truth image is a high-resolution image in which the same object as the low-resolution image exists. Example 1 quadruples the number of pixels (twice vertically and twice horizontally) by upsampling, and thus the number of pixels in the high-resolution image is $(2h, 2w, c = 1)$. However, the upsampling magnification is not limited to this example. A pair of low-resolution and high-resolution images can be prepared by real imaging, imaging simulation, Computer Graphics (CG), etc.

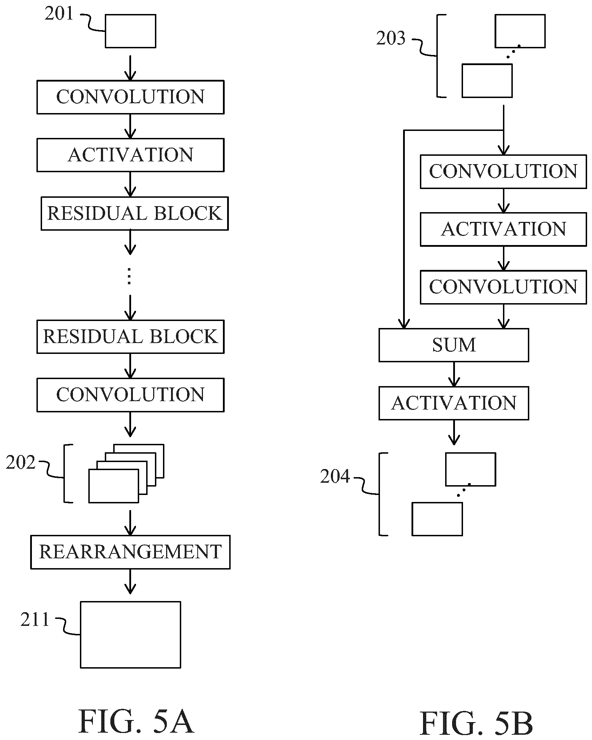

In step S102, the calculator 114 inputs the training input data to the machine learning model and generates an upsampled estimated image. Example 1 uses the Convolutional Neural Network (CNN) illustrated in FIGs. 5A and 5B as the machine learning model. However, the type of machine learning model is not limited to this example, and Multi-Layer Perceptron (MLP), Vision Transformer (ViT), Generative Adversarial Network (GAN), diffusion model, etc. may be used. In addition, model parameters refer to a plurality of variables determined by training in the machine learning model. More specifically, they include the weights and biases of the kernel (filter) of a convolution layer, and the weights and biases of a full connection layer.

In Example 1, the CNN illustrated in FIG. 5A generates a first residual image 211 from training input data 201. The training input data 201 is converted into a feature map via the convolution layer and activation function. Example 1 uses Rectified Linear Unit (ReLU) as the activation function, but Leaky may use Leaky ReLU or a sigmoid function. The convolution layer includes 48 kernels and biases with sizes of $(3, 3, 1)$ in the vertical, horizontal, and channel directions. As a result, a feature map with the number of pixels of $(h, w, 48)$ is generated. The feature map is input to the residual block. The feature map refers to output data of each layer generated during the calculation of the machine learning model. The size of the kernel and the number of kernels and biases are not limited to those described above.

The residual block is illustrated in FIG. 5B. A residual block input 203 is passed through a convolution layer twice, each of which has 48 kernels and biases of size $(3, 3, 48)$ (although ReLU is applied during the processing), and a sum of the result and the residual block input 203 for each element is obtained. A residual block output 204 is generated by applying ReLU to the obtained sum.

There are a plurality of residual blocks, and 10 residual blocks are connected in Example 1. However, the number of residual blocks is not limited to this example. Each feature map generated in the residual block has the number of pixels of $(h, w, 48)$. The final convolution layer has four kernels and biases of size $(3, 3, 48)$.

As a result of the calculation by the calculator 114, the residual map 202 having the number of pixels of $(h, w, 4)$ is generated. The number of channels in the residual map 202 corresponds to the upsampling magnification. The calculator 114 generates a first residual image 211 having the number of pixels of $(2h, 2w, 1)$ by rearranging the pixels of the residual map 202. The components of the first channel of the residual map 202 are set so that indices of the first residual image 211 in the vertical and horizontal directions are stored in odd-numbered pixels. The components of the second channel are set so that indices in the vertical direction are stored in odd-numbered pixels and indices in the horizontal direction are stored in even-numbered pixels. The components of the third channel are set so that indices in the vertical direction are stored in even-numbered pixels and indices in the horizontal direction are stored in odd-numbered pixels. The components of the fourth channel are set so that indices in the vertical and horizontal directions are stored in even-numbered pixels.

The calculator 114 generates an estimated image by calculating the sum of a bicubic enlarged image obtained by enlarging the low-resolution image to (2h, 2w, 1) by four times the number of pixels using bicubic interpolation and the first residual image 211. However, the low-resolution image may be enlarged by rule-based processing that does not use another machine learning model, such as bilinear interpolation or nearest neighbor interpolation. The sum of A and B includes multiplying A or B by -1 and calculating a difference. A target to be estimated by the machine learning model may be an estimated image directly, rather than the residual.

In step S103, the updater 115 updates the model parameters of the machine learning model based on the difference between the estimated image and the ground truth image (high-resolution image). Example 1 uses the MSE of the estimated image and the high-resolution image as the loss function, but is not limited to this example, and may use Mean Absolute Error (MAE) or Perceptual Loss. For updating, backpropagation or the like is used.

In step S104, the updater 115 determines whether the training of the machine learning model has been completed. If not, the flow returns to step S101 to acquire one or more new sets of training input data and a ground truth image. If completed, the model parameters are stored in the memory 111.

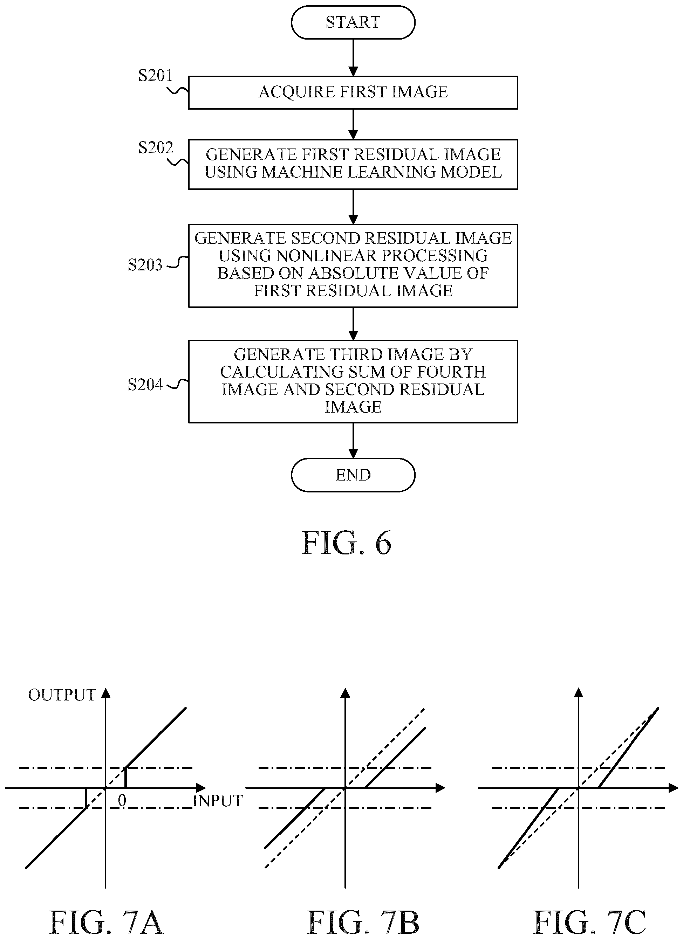

Next, the upsampling using a trained CNN (machine learning model) executed in the image pickup apparatus 102 will be described with reference to FIG. 1 illustrating the flow of the processing and a flowchart in FIG. 6. In the image pickup apparatus 102, the acquiring unit 125 and the calculator 126 constituted by a computer (image processing apparatus) execute the following processing (first and second steps) according to a (computer) program. The acquiring unit 125 and the calculator 126 constitute a first generator and a second generator.

In step S201, the acquiring unit 125 acquires a first image 221. The first image 221 is a luminance component of a developed captured image, similarly to training. The number of pixels in the vertical, horizontal, and channel directions in the first image 221 are expressed by (H, W, C), and C=1 in Example 1.

The first image 221 may be a partial area of the captured image. The entire captured image can be upsampled by repeating a series of processing described below and by changing the position of the partial area and combining the results. In a case where the partial area is set to the first image 221, only step S202 may be executed for each partial area, and the results may be combined before step S203 and subsequent steps are executed. A plurality of partial areas may have overlapping areas so that the division boundary line is invisible after upsampling. After upsampling, the overlapping areas may be averaged or one of the results may be employed.

In step S202, the calculator 126 generates a first residual image 231 based on the first image 221 using the machine learning model (CNN). Similarly to training, the calculator 126 uses the CNN having the configuration illustrated in FIGs. 5A and 5B, and obtains and uses model parameters trained by the training apparatus 101 from the memory 123. The input data input to the CNN is the first image 221. The output data output from the CNN is the first residual image 231. The number of pixels in the vertical, horizontal, and channel directions of the first residual image 231 is (2H, 2W, C), and C=1 in Example 1. The calculator 126 obtains a second image, which is a high-resolution upsampled image of the first image 221, by calculating the sum of a fourth image 224, which is obtained by enlarging the first image 221 to (2H, 2W, C=1) by bicubic interpolation (the same processing as that performed for the low-resolution image during training), and the first residual image 231.

Here, the second image may have unintended luminance changes that are unrelating to upsampling, and may also have color changes in a case where the first image 221 has a plurality of color components. As described before the description of Example 1, components in the loss function during training that are sufficiently small in order than the components relating to the task performed by the machine learning model (resolution improving processing in Example 1) may remain even after training. These small components cause unintended luminance and color changes.

The CNN with the structure illustrated in FIGs. 5A and 5B rearranges the residual map 202 with the number of pixels (H, W, 4) and generates the first residual image 211 with the number of pixels (2H, 2W, 1). Thus, a configuration in which the number of pixels changes in the vertical or horizontal directions is likely to cause unintended luminance and color changes. Since the estimation error is likely to vary on a channel-by-channel basis, small errors $\delta_1, \delta_2, \delta_3$, and $\delta_4$ may occur in each channel of the residual map 202. In a case where the residual map 202 having this error is rearranged and the first residual image 211 is generated, pixels having errors $\delta_1$ to $\delta_4$ are arranged in adjacent $2\times2$ pixel units and a periodic pattern is generated. This pattern is particularly noticeable in a flat area where a signal value does not change and in a gradation area where the change is gradual. In order to suppress such unintended luminance and color changes, the following processing is performed.

In step S203, the calculator 126 generates the second residual image 232 using nonlinear processing (nonlinear conversion) based on the absolute value of the first residual image 231. The nonlinear processing performed here is processing for pixels having a non-zero signal value among the plurality of pixels included in the first residual image 231 so that a residual attenuation rate becomes higher for a pixel with a smaller absolute value of the signal value.

Example 1 uses threshold processing as the nonlinear processing. Examples include hard thresholding illustrated in FIG. 7A and soft thresholding illustrated in FIG. 7B. In FIGs. 7A and 7B, a horizontal axis represents an input signal value, a vertical axis represents an output signal value, a broken line represents the identity transformation, a solid line represents hard or soft thresholding, and an alternate long and short dash line represents a thresholding threshold value. The hard thresholding is expressed by the following equation (1):

$$s_{out} = \begin{cases} 0, & |s_{in}| \le |s_{thr}| \\ s_{in}, & |s_{thr}| < |s_{in}| \end{cases} \qquad \ldots(1)$$

where $s_{in}$ is an input signal value, $s_{out}$ is an output signal value, and $s_{thr}$ is a thresholding threshold value.

The presence or absence of an equal sign may be added to the bottom inequality instead of the top inequality.

Soft thresholding is expressed by the following equation (2):

$$s_{out} = \begin{cases} s_{in} + |s_{thr}|, & s_{in} \le -|s_{thr}| \\ 0, & |s_{in}| < |s_{thr}| \\ s_{in} - |s_{thr}|, & |s_{thr}| \le s_{in} \end{cases} \qquad \ldots(2)$$

The signal value of each pixel of a third image 223, which is the sum of the second residual image 232 generated by hard or soft thresholding and the fourth image 224, is a value between the signal values of the pixels corresponding to each pixel of the third image 223 in the second image and the fourth image 224. Therefore, new problems other than the unintended luminance and color changes suppressed by nonlinear processing are suppressed.

However, in hard thresholding, residuals whose absolute value is greater than the threshold value remain unchanged, so while the effect of the task (resolution improving processing in Example 1) is less likely to decrease, discontinuous steps in signal values may occur in the second residual image 232. The soft thresholding does not cause a step in the second residual image 232, but the residual approaches 0 by the threshold value, so the effect of the task is slightly reduced.

Hence, in a case where the soft thresholding is used, the residual may be further scaled as illustrated in FIG. 7C. the soft thresholding combined with scaling is expressed by the following equation (3):

$$s_{out} = \frac{s_0}{s_0 - |s_{thr}|} f_{st}(s_{in}) \qquad \ldots(3)$$

where $f_{st}$ is soft thresholding in equation (2), and $s_0$ is a value that controls a scaling coefficient applied (multiplied) to the residual image obtained by performing soft thresholding for the first residual image 231.

The scaling coefficient is a coefficient greater than 1 based on the thresholding threshold value $s_{thr}$. For example, $s_0$ may be set to a signal value width that the first image 221 can have (a difference between the maximum and minimum signal values). For example, the signal value width is 255 for an 8-bit developed image, and 30719 for a raw image with a maximum signal value of 32767 and an optical black level of 2048. In a case where the signal value is normalized to a range from 0 to 1, the signal value width is 1.

In a case where $s_0$ is set as the signal value width, the effect of the task by the second residual image 232 is always equal to or less than that of the first residual image 231, so that the effect can be prevented from becoming excessive. Thereby, a signal value of each pixel of the third image 223 becomes a value between the signal values of the pixels in the second image and the fourth image 224 that correspond to each pixel of the third image 223.

Other processing may be executed as long as it is nonlinear processing that increases the residual attenuation rate as the absolute value of the component that is not zero of the first residual image 231 decreases. The other processing will be explained in Example 2. Such nonlinear processing executed on the first residual image 231 can generate the second residual image 232 in which unintended luminance and color changes are suppressed while a decrease in the effect of the task (resolution improving processing) is suppressed.

In step S204, the calculator 126 generates a third image 223 by calculating the sum of the fourth image 224 and the second residual image 232. The third image 223 is a high-resolution image obtained by upsampling the first image 221, in which unintended luminance and color changes are suppressed. By using the second residual image 232, a signal value of each pixel of the third image 223 becomes closer to a signal value of the pixel corresponding to each pixel of the third image in the fourth image 224 than a signal value of the pixel corresponding to each pixel of the third image in the second image, as a non-zero absolute value of the signal value of the pixel corresponding to each pixel of the third image in the first residual image 231 becomes smaller. The number of pixels of the third image 223 is (2H, 2W, C). Example 1 upsamples only the luminance component, and thus C=1.

A chrominance component of a captured image are enlarged to four times the number of pixels by bicubic interpolation or the like, and combined with the third image 223 to obtain an upsampled image having a plurality of color components.

Example 1 uses this configuration because human vision is insensitive to color resolution, and processing can be expedited by limiting an upsampling target by the CNN to luminance only. Nevertheless, images having a plurality of color components may also be upsampled by the CNN. Example 1 increases the number of pixels in the vertical and horizontal directions within the machine learning model, but the first image input to the machine learning model may be an image enlarged by bicubic interpolation or the like.

Since unintended luminance and color changes are noticeable in areas where the change in the signal value of the image is small, the effect of the nonlinear processing in step S203 may be limited to the flat areas and gradation area. This can be achieved by acquiring information about the edges of the fourth image 224 by spatial differentiation, edge extraction, etc., and by generating the third image 223 based on the information about the edges. The nonlinear processing in step S203 may be limited to only non-edge areas to generate the second residual image 232. Alternatively, in step S204, the third image 223 may be generated by adding the second residual image 232 only to non-edge areas of the fourth image 224 and the first residual image 231 to edge areas of the fourth image 224.

Since unintended luminance and color changes are noticeable in areas where the luminance value of the image is low (dark areas), the effect of the nonlinear processing in step S203 may be limited to the dark areas. This can be achieved by generating the third image 223 based on the magnitude of the signal value of each pixel of the fourth image 224. The nonlinear processing in step S203 may be limited to only the dark areas of the fourth image 224 to generate the second residual image 232. Alternatively, in step S204, the third image 223 may be generated by adding the second residual image 232 to only the dark areas of the fourth image 224 and the first residual image 231 to other areas. In particular, in a case where the first image 221 is an undeveloped raw image, unintended luminance and color changes in the dark areas are highlighted and easily noticeable by gamma correction during development.

In a case where the number of bits of the model parameters is smaller during image estimation using a trained machine learning model than during training of the machine learning model, unintended luminance and color changes may deteriorate due to quantization errors. Thus, in a case where the number of bits of at least one or more model parameters of the machine learning model that generates the first residual image 231 is smaller than during training, the effect of the processing is likely to be obtained from step S203 or subsequent steps. The bit number reduction during image estimation is performed in a case where simpler image estimation processing using an Application Specific Integrated Circuit (ASIC) or the like is desired.

The image estimation processing may be simplified by reducing the bit number of some of the model parameters of each layer of the machine learning model or some calculations such as convolution performed in each layer. In this case, unintended luminance and color changes may also deteriorate. Thus, in a case where the machine learning model includes a plurality of first layers having a first bit number and a plurality of second layers having a second bit number smaller than the first bit number, an effect in the processing of step S203 and subsequent steps can be easily obtained.

The nonlinear processing based on the absolute value of the first residual image 231 in step S203 includes processing that can obtain a result similar to that of the nonlinear processing based on the absolute value, even if the absolute value is not directly calculated.

For example, instead of calculating the absolute value, the positive and negative components of the first residual image 231 may be divided into two and nonlinear processing may be performed for each component. This will be described as an example of a case where soft thresholding is performed for the first residual image 231. The second residual image 232 is set to the sum of the result of subtracting a threshold value (which is positive here) from the first residual image 231 and then performing ReLU, and the result of subtracting a threshold value from -1 times the first residual image 231, then performing ReLU, and multiplying by -1. This method can generate the second residual image 232 without directly calculating the absolute value of the first residual image 231.

As described above, this example can provide an image processing method and an image processing apparatus (the acquiring unit 125 and the calculator 126), each of which can suppress unintended luminance and color changes in image estimation using a machine learning model.

EXAMPLE 2

An image processing system according to Example 2 of the present disclosure will be described. The image estimation task performed by the machine learning model in Example 2 is blur correction. A target to be corrected is aberration generated in the optical system and blur due to diffraction. However, a similar effect can be obtained for other defocus blur, shaking, etc. A similar effect can be obtained for tasks other than blur correction.

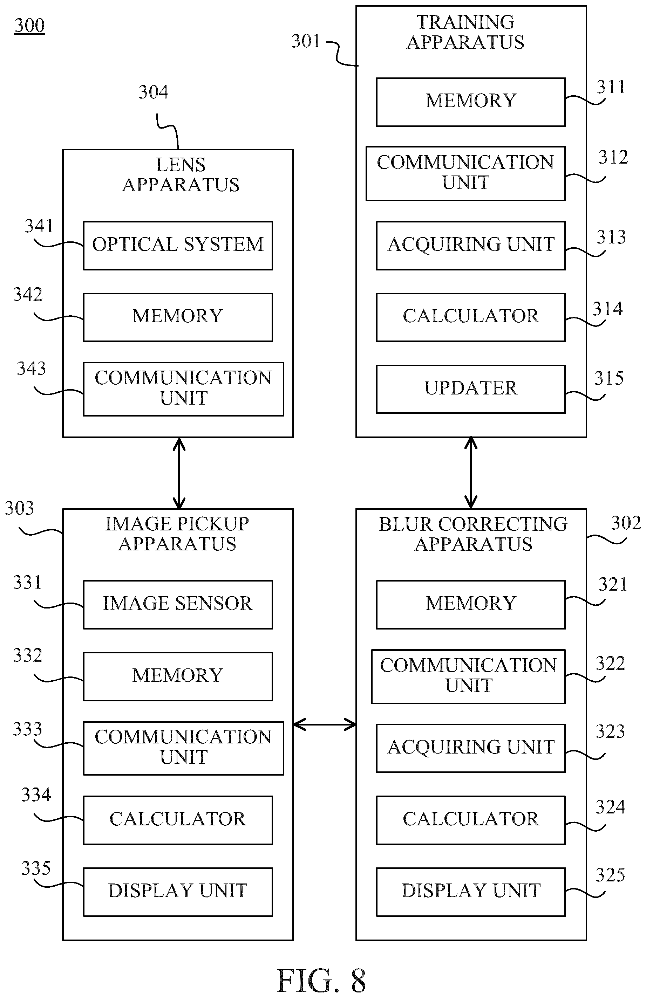

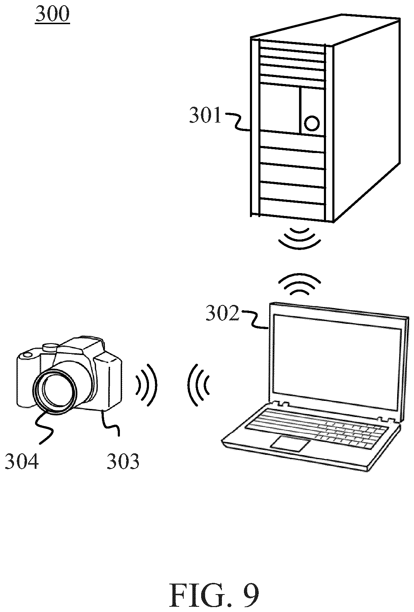

FIG. 8 illustrates the configuration of an image processing system 300 according to Example 2. FIG. 9 illustrates the overview of the image processing system 300. The image processing system 300 includes a training apparatus 301, a blur correcting apparatus 302, an image pickup apparatus 303, and a lens apparatus 304.

The image pickup apparatus 303 is a lens interchangeable type image pickup apparatus, and a plurality of types of lens apparatus 304 can be connected. An object image formed by the lens apparatus 304 is photoelectrically converted by an image sensor 331 to obtain a captured image. The captured image is affected by aberrations and image degradation due to diffraction generated in an optical system 341. A calculator 334 performs necessary processing for the captured image, such as removing defective pixels. A memory 332 stores the captured image processed by the calculator 334.

The blur correcting apparatus 302 as an image processing apparatus corrects the blur in the captured image using a machine learning model to generate a blur-corrected third image. Example 2 performs blur correction for an undeveloped raw image. However, blur correction may also be performed for a developed image. The model parameters of the machine learning model are trained by the training apparatus 301, and are acquired in advance by the blur correcting apparatus 302 via the communication unit 312 of the training apparatus 301 and the communication unit 322 of the blur correcting apparatus 302, and stored in the memory 321. Training of the machine learning model and blur correction using the trained model parameters will be described later. The blur-corrected third image undergoes other necessary processing by the calculator 324, and is stored in the memory 321 of the blur correcting apparatus 302 or the memory 332 of the image pickup apparatus 303, or is displayed on the display unit 325 of the blur correcting apparatus 302 or the display unit 335 of the image pickup apparatus 303.

Referring now to FIG. 4, which was also used in Example 1, a description will be given of a method for training the machine learning model executed by the training apparatus 301. The training apparatus 301 including a computer, which has a memory 311, a communication unit 312, an acquiring unit 313, a calculator 314, and an updater 315. The acquiring unit 313, the calculator 314, and the updater 315 execute the following processing (processing steps and update steps) according to a program. The acquiring unit 313 and the calculator 314 configure a processing unit, and the updater 315 corresponds to an update unit. In this example, CNN is used as the machine learning model, but other methods may be used.

In step S101, the acquiring unit 313 acquires one or more sets of training input data and a ground truth image from the memory 311. The training input data includes a blurred image (input image for training) and a first map. The blurred image is an image that is degraded by blur to be corrected. The ground truth image is an image that contains the same object as the corresponding blurred image, and has less (or no) blur than the blurred image. The blurred image and the ground truth image are undeveloped raw images. The blurred image and the ground truth image can be prepared by actual imaging, imaging simulation, CG, or the like.

In Example 2, correction for all blurs occurring in the optical system 341 is learned all at once. Thus, the memory 311 stores blurred images including various blurs occurring in the optical system 341 and the ground truth images corresponding to them. Blur of the optical system 341 is determined by the state of the optical system 341 (focal length, F-number (aperture value), focus distance, etc.) and image plane coordinates in the vertical and horizontal directions, etc. The focus distance is a distance between the object on which the optical system 341 is focused and the image sensor 331 or the optical system 341.

Since the image pickup apparatus 303 according to Example 2 is of an interchangeable lens type, the optical system 341 may be connected to a plurality of types of image pickup apparatus having image sensors of different sizes and different pixel numbers. Thus, the color acquired by the image sensor, the pixel pitch of the image sensor, and the action of the optical low-pass filter may be able to change. In Example 2, all image sensors of the image pickup apparatus that can be connected to the optical system 341 have an RGB Bayer array, and the colors are fixed to RGB. However, the color filter array is not limited to this example.

The plurality of degraded images stored in the memory 311 include image degradations that change in various ways within a range of values that the image plane coordinates, pixel pitch of the image sensor 331, and optical low-pass filter can take, in addition to the focal length, aperture value, and focus distance of the optical system 341.

In Example 2, the first map is a map that specifies blur acting on the blurred image. The first map has six values for each channel, *i.e.*, the focal length, aperture value, focus distance, pixel pitch of the image sensor 331, vertical image plane coordinate, and horizontal image plane coordinate of the optical system 341, which correspond to the blur, respectively. The first map may have channels indicating information such as the separation method and cutoff frequency of the optical low-pass filter, and the lens manufacturing error. By inputting the first map to the machine learning model together with the blurred image, the machine learning model can identify the blur that has acted on the blurred image from the first map, and thus can improve the blur correcting effect. If only the blurred image is input, the machine learning model estimates the blur from the blurred image and corrects it, or corrects the learned blurs of various shapes on an average basis, and thus cannot acquire a high correction effect.

The first map may be a map indicating information other than blur, as long as it is information regarding the task to be performed. For example, it may be a map indicating the noise intensity in the blurred image, or a depth map or segmentation map corresponding to the blurred image.

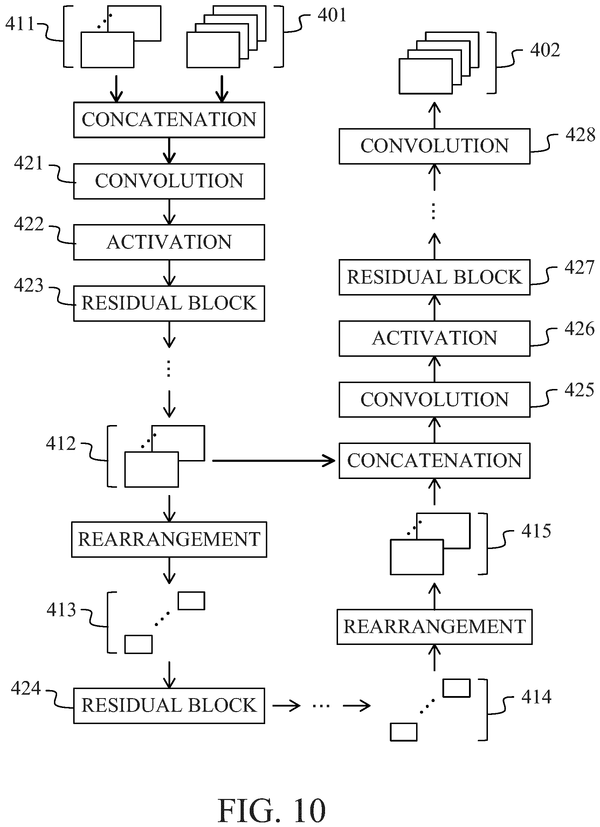

In step S102, the calculator 314 inputs training input data to the machine learning model (CNN) and generates an estimated image by correcting the blur of the blurred image. FIG. 10 illustrates an example of the configuration of the CNN in Example 2. Where the number of pixels of the blurred image and the ground truth image are (h, w, c), c = 1 because both are raw images in a Bayer array. Example 2 inputs the blurred image 401 rearranged to (h/2, w/2, 4) to the CNN. The R component of the Bayer is the first channel, G adjacent to R in the horizontal direction is the second channel, G adjacent to R in the vertical direction is the third channel, and B is the fourth channel. However, the input method is not limited to this example.

The first map 411 is connected to the blurred image 401 in the channel direction, and thus the number of pixels is (h/2, w/2, 6). However, the blurred image 401 or the first map 411 may be input to a different layer and converted into a feature map, and then connected to the other (or a feature map generated from it). In this case, the number of pixels in the vertical and horizontal directions between the blurred image 401 and the first map 411 do not necessarily have to coincide with each other. The CNN configuration is merely an example, and another structure may be used.

The calculator 314 inputs the concatenation result of the blurred image 401 and the first map 411 in the channel direction to the convolution layer 421. The convolution layer 421 has 64 kernels and biases. The kernel size is (3, 3, 10). The structures of the activation function 422 and the residual block 423 are similar to those of Example 1. The convolution layer of the residual block 423 has 64 kernels and biases, and the kernel size is (3, 3, 64). The first feature map 412 is generated by including five residual blocks 423. The number of pixels of the first feature map 412 is (h/2, w/2, 64).

The calculator 314 rearranges the first feature map 412 into (h/4, w/4, 256) and generates the first reduced feature map 413. The first reduced feature map 413 is converted into the second reduced feature map 414 through five residual blocks 424. The convolution layer of the residual block 424 has 256 kernels and biases, and the kernel size is (3, 3, 256). The number of pixels of the second reduced feature map 414 is (h/4, w/4, 256).

The calculator 314 rearranges the second reduced feature map 414 into (h/2, w/2, 64) and generates the second feature map 415. The calculator 314 concatenates the first feature map 412 and the second feature map 415 in the channel direction and inputs them to the convolution layer 425. The convolution layer 425 has 64 kernels and biases, and the kernel size is (3, 3, 128). As a result of the activation function 426, the five residual blocks 427, and the convolution layer 428, an estimated image 402 is generated. The convolution layer of the residual block 427 has 64 kernels and biases, and the kernel size is (3, 3, 64). The convolution layer 428 has four kernels and biases, and the kernel size is (3, 3, 64). The estimated image 402, which is output data of the machine learning model, is an image in which the blur of the blurred image 401 has been corrected, and has the number of pixels of (h/2, w/2, 4).

In step S103, the updater 315 updates the CNN model parameters based on a difference between the estimated image and the ground truth image. In calculating the difference, the estimated image or the ground truth image is rearranged so that the number of pixels coincides in each direction.

In step S104, the updater 315 determines whether training of the machine learning model has been completed. In a case where the training has not yet been completed, the flow returns to step S101 to acquire one or more new sets of training input data and a ground truth image. In a case where the training has been completed, the model parameters are stored in the memory 311.

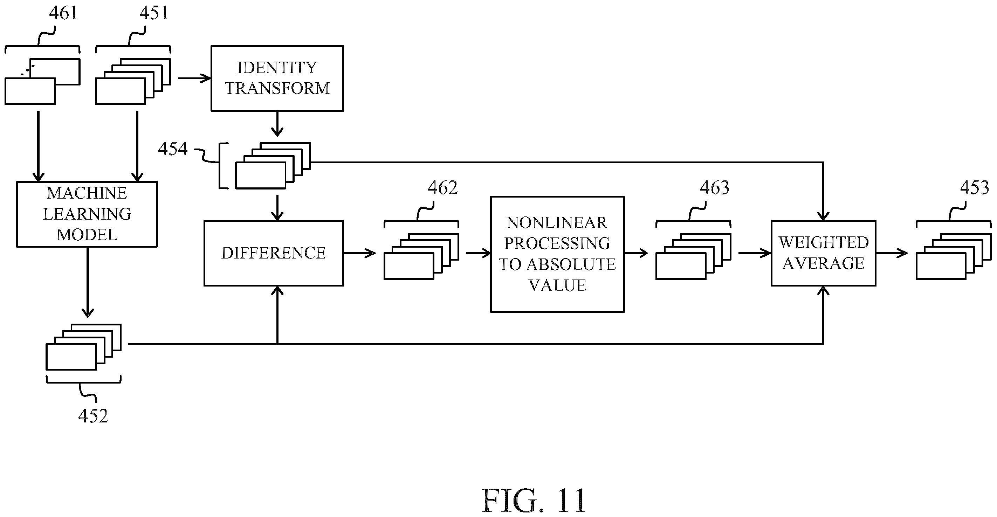

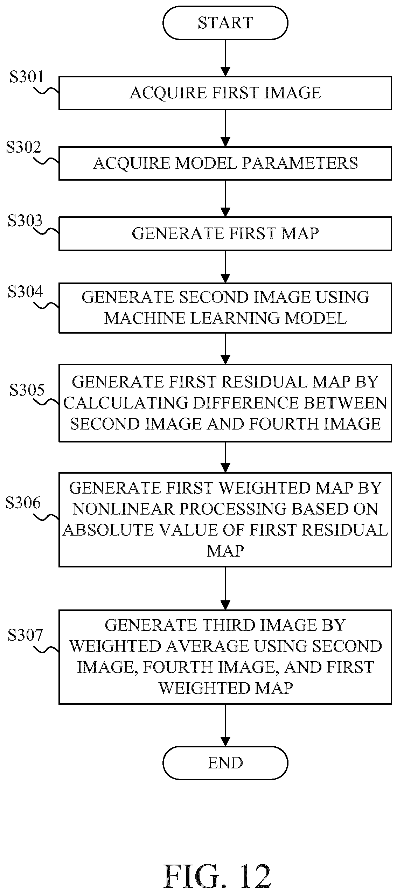

A description will now be given of blur correction using the trained CNN (machine learning model) executed by the blur correcting apparatus 302 with reference to FIG. 11 illustrating the flow of the processing and a flowchart of FIG. 12. The blur correcting apparatus 302, which includes a computer, has a memory 321, a communication unit 322, an acquiring unit 323, a calculator 324, and a display unit 325. The acquiring unit 323 and the calculator 324 execute the following processes (first step and second step) according to a (computer) program. The acquiring unit 323 and the calculator 324 configure a first generator and a second generator.

In step S301, the acquiring unit 323 acquires a captured image (first image) 451, which is an undeveloped raw image. The first image 451 contains blur due to aberration and diffraction generated in the optical system 341.

In step S302, the acquiring unit 323 acquires the model parameters of the CNN for use with the blur correction of the first image 451. In Example 2, a plurality of CNN model parameters may be prepared for each type of lens apparatus. However, the model parameters may be prepared in common for a plurality of types of lens apparatus, or a plurality of model parameters may be prepared for one type of lens apparatus. Example 2 uses a CNN with a common configuration for all lens apparatus, but may change the configuration of the CNN depending on the type of lens apparatus.

Information regarding the lens apparatus 304 that has been used to capture the first image 451 may be acquired from the metadata of the first image 451, for example. Identification (ID) information of the lens apparatus 304 is stored in a memory 342. When the lens apparatus 304 and the image pickup apparatus 303 are connected or when imaging is performed by the image pickup apparatus 303, the ID information is acquired by the image pickup apparatus 303 via the communication unit 333 of the image pickup apparatus 303 and the communication unit 343 of the lens apparatus 304, and written into the metadata of the first image 451.

In step S303, the calculator 324 generates a first map 461 that is a map that specifies the blur acting on the first image 451. Similarly to training, each channel of the first map 461 has a focal length, aperture value, and focus distance of the optical system 341 when the first image 451 was captured, the pixel pitch of the image sensor 331, and the values of the vertical and horizontal image plane coordinates. Information regarding each value is acquired from the metadata of the first image 451.

Similarly to training, the first image 451 input to the CNN is rearranged in pixels. The first image 451 has a Bayer array with the number of pixels (W, H, C = 1) in the vertical, horizontal, and channel directions. Due to the rearrangement, the number of pixels of the first image 451 becomes (W/2, H/2, 4). Similarly to training, the first map 461 is concatenated with the first image 451 in the channel direction, so the number of pixels becomes (W/2, H/2, 6). Example 2 generates the first map 461 based on the number of pixels of the first image 451.

In the first map 461, the channels representing the focal length, aperture value, and focus distance of the optical system 341 and the pixel pitch of the image sensor 331 each have the same values in the vertical and horizontal directions.

This is because this information does not spatially change. On the other hand, the image plane coordinates in the vertical and horizontal directions change for each pixel of the first image 451, so the channels representing them have nonuniform values in the vertical or horizontal directions.

In Example 2, the values of the vertical and horizontal image plane coordinates are the coordinates of the corresponding R pixel in the first image 451. However, the coordinates of pixels of other colors may be used. The order of steps S302 and S303 is not limited.

In step S304, the calculator 324 inputs input data including the first image 451 and the first map 461 to the CNN (machine learning model) and generates a second image 452 in which the blur has been corrected. The CNN has the same structure as that of FIG. 10, and uses the model parameters acquired in step S302.

The second image 452, which is the output data of the machine learning model, may have unintended luminance and color changes. In the CNN illustrated in FIG. 10, the number of pixels in the vertical and horizontal directions changes because the first feature map 412 is rearranged to the first reduced feature map 413 and the second reduced feature map 414 is rearranged to the second feature map 415. In image processing using the machine learning model that includes changes in the number of pixels in the vertical or horizontal direction, unintended luminance or color changes are likely to occur in the second image 452 due to variations in values for each channel. The first map 461 having a plurality of channels or having nonuniform values in the vertical or horizontal direction within a channel is input to the CNN together with the first image 451. In this configuration, the CNN performs different processing depending on the value of the first map 461, and thus the task performed by the CNN becomes complex, and unintended luminance and color changes are likely to occur in the second image 452.

In step S305, the calculator 324 generates a first residual image 462 by calculating a difference between the second image 452 and the fourth image 454. In Example 2, the fourth image 454 is an image obtained by performing an identity transformation for the first image 451 (*i.e.*, the same image as the first image 451). However, the first image 451 may be used as it is as the fourth image 454 without performing the identity transformation. The calculator 324 generates a first residual image 462 by subtracting the fourth image 454 from the second image 452.

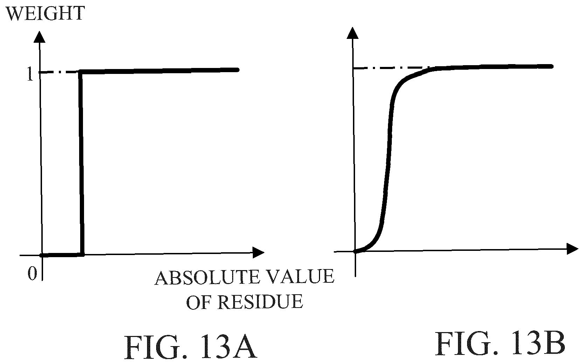

In step S306, the calculator 324 generates a weight map 463 by nonlinear processing based on the absolute value of the first residual image 462. The weight map 463 represents the weight of the second image 452 in the weighted average of the second image 452 and the fourth image 454. The weight map 463 is generated by nonlinear processing such as that illustrated in FIGs. 13A and 13B, for example. A horizontal axis of FIGs. 13A and 13B represents the absolute value of the first residual image 462, and a vertical axis represents the weight of the weight map 463.

In the nonlinear processing of FIG. 13A, the weight map 463 is generated as a binary value of 0 or 1. In calculating the weighted average, the boundary between 0 and 1 may appear discontinuous, so if the nonlinear processing such as that illustrated in FIG. 13A is performed, spatial blurring processing may be performed for weight map 463. On the other hand, in the nonlinear processing of FIG. 13B, the weight changes continuously according to the absolute value of the residual, so such a problem is unlikely to occur. The weight of each pixel in weight map 463 decreases as the absolute value of the corresponding pixel in first residual image 462 decreases.

In step S307, calculator 324 generates third image 453 based on second image 452, fourth image 454, and weight map 463. Third image 453 is an estimated image in which unintended luminance and color changes are suppressed and blur is corrected. The calculator 324 calculates a weighted average by calculating the sum (A+B) of the product (A) of the weight map 463 and the second image 452 and the product (B) of the result of subtracting the weight map 463 from 1 and the fourth image 454, and generates the third image 453. Alternatively, the third image 453 may be generated by adding the product of the weight map 463 and the first residual image 462 to the fourth image 454.

Since the third image 453 is generated by the weighted average of the second image 452 and the fourth image 454, the signal value of each pixel of the third image 453 has a value between the signal values of the pixels in the second image 452 and the fourth image 454 that correspond to each pixel of the third image 453.

By using the weight map 463, the signal value of each pixel of the third image 453 is closer to the signal value of the pixel in the fourth image 454 corresponding to each pixel of the third image than to the signal value of the pixel in the second image 452 corresponding to each pixel of the third image, as the non-zero absolute value of the signal value of the corresponding pixel in the first residual image 462 decreases.

This example can provide an image processing method and an image processing apparatus (blur correcting apparatus 302), each of which can suppress unintended luminance and color changes in image estimation using a machine learning model.

OTHER EMBODIMENTS

Embodiment(s) of the disclosure can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read-only memory (ROM), a storage of distributed computing systems, an optical disc (such as a compact disc (CD), digital versatile disc (DVD), or Blu-ray Disc (BD)™), a flash memory device, a memory card, and the like.

While the disclosure has described example embodiments, it is to be understood that some embodiments are not limited to the disclosed embodiments. The scope of the following claims is to be accorded the broadest interpretation so as to encompass all such modifications and equivalent structures and functions.

Each example can suppress unintended luminance and color changes in image estimation using a machine learning model.

**Claims**

1.  An image processing method comprising:

    a first step (S202) of generating a first residual image (231) based on a first image (221) using a machine learning model; and
    a second step (S204) of generating a third image (223) based on a fourth image (224) and an absolute value of the first residual image,
    **characterized in that** the fourth image is the first image or an image based on the first image,
    wherein in a case where a second image is a sum of the fourth image and the first residual image, the second step sets a signal value of each pixel in the third image to a value closer to a signal value of a pixel in the fourth image corresponding to each pixel in the third image than a signal value of a pixel in the second image corresponding to each pixel in the third image as a non-zero absolute value of a signal value of a pixel in the first residual image corresponding to each pixel in the third image decreases.

2.  The image processing method according to claim 1, **characterized in that** the second step sets the signal value of each pixel in the third image to a value between the signal value of the pixel in the fourth image corresponding to each pixel in the third image and the signal value of the pixel in the second image corresponding to each pixel in the third image.

3.  The image processing method according to claim 1 or 2, **characterized in that** in the second step, the third image is generated using a result of a nonlinear transformation based on the absolute value of the first residual image.

4.  The image processing method according to any one of claims 1 to 3, **characterized in that** in the second step, the third image is generated using a result of threshold processing based on an absolute value of the first residual image.

5.  The image processing method according to any one of claims 1 to 4, **characterized in that** in the second step, the third image is generated based on a second residual (232) image generated from the first residual image using soft thresholding.

6.  The image processing method according to claim 5, **characterized in that** in the second step, the second residual image is generated by applying a coefficient larger than 1 based on a threshold value of the soft thresholding to a residual image obtained by performing the soft thresholding for the first residual image.

7.  The image processing method according to any one of claims 1 to 6, **characterized in that** in the second step, the third image is generated based on a weight map based on the absolute value of the first residual image, the fourth image, and one of the first residual image and the second image.

8.  The image processing method according to claim 7, **characterized in that** the weight map represents a weight of the first residual image or the second image,
    wherein in the weight map, the weight reduces for a pixel in the first residual image having a smaller non-zero absolute value.

9. The image processing method according to any one of claims 1 to 8, **characterized in that** in the first step, the number of pixels in a vertical or horizontal direction in any of input data input to the machine learning model, output data output from the machine learning model, and a plurality of feature maps generated within the machine learning model is different from another.

10. The image processing method according to any one of claims 1 to 9, **characterized in that** in the first step, the input data input to the machine learning model includes the first image and a first map,
wherein the first map has a plurality of channels.

11. The image processing method according to any one of claims 1 to 10, **characterized in that** in the first step, input data input to the machine learning model includes the first image and a first map,
wherein the first map has nonuniform values in a vertical or horizontal direction.

12. The image processing method according to any one of claims 1 to 11, **characterized in that** the machine learning model has a plurality of model parameters previously determined by training,
wherein the number of bits of at least one of the plurality of model parameters is smaller during generating the first residual image than during the training.

13. The image processing method according to any one of claims 1 to 12, **characterized in that** in the second step, the third image is generated based on information about an edge of the fourth image or a magnitude of a signal value of each pixel in the fourth image.

14. The image processing method according to any one of claims 1 to 13, **characterized in that** the second image is an image obtained by performing at least one of degradation correcting, resolution improving, contrast improving, demosaicing, dynamic range expanding, gradation increasing, lighting changing, changing a defocus blur shape, focus distance changing, and depth of field changing for the first image.

15. The image processing method according to any one of claims 1 to 14, **characterized in that** the machine learning model has a plurality of first layers having a first bit number and a plurality of second layers having a second bit number smaller than the first bit number.

16. A program for causing a computer to execute the image processing method according to any one of claims 1 to 15.

17. An image processing apparatus (125, 126, 302) comprising:

a first generator (323, 324) configured to generate a first residual image (231) based on a first image (221) using a machine learning model; and
a second generator (323, 324) configured to generate a third image (223) based on a fourth image (224) and an absolute value of the first residual image,
wherein the fourth image is the first image or an image based on the first image, and
wherein in a case where a second image is a sum of the fourth image and the first residual image, the second generator sets a signal value of each pixel in the third image to a value closer to a signal value of a pixel in the fourth image corresponding to each pixel in the third image than a signal value of a pixel in the second image corresponding to each pixel in the third image as a non-zero absolute value of a signal value of a pixel in the first residual image corresponding to each pixel in the third image decreases.

18. An image pickup apparatus (102, 303) comprising:

the image processing apparatus (125, 126, 302) according to claim 17; and
an image sensor (122, 331) configured to acquire a captured image as the first image.

221

MACHINE
LEARNING
MODEL

231

NONLINEAR
PROCESSING

232

ENLARGEMENT
PROCESSING

224

SUM

223

## FIG. 1

TRAINING APPARATUS 101

111 MEMORY

112 COMMUNICATION UNIT

113 ACQUIRING UNIT

114 CALCULATOR

115 UPDATER

IMAGE PICKUP APPARATUS 102

121 OPTICAL SYSTEM

122 IMAGE SENSOR

123 MEMORY

124 COMMUNICATION UNIT

125 ACQUIRING UNIT

126 CALCULATOR

127 DISPLAY UNIT

## FIG. 2

FIG. 3

FIG. 4

201

CONVOLUTION

ACTIVATION

RESIDUAL BLOCK

⋮

RESIDUAL BLOCK

CONVOLUTION

202

REARRANGEMENT

211

**FIG. 5A**

203

CONVOLUTION

ACTIVATION

CONVOLUTION

SUM

ACTIVATION

204

**FIG. 5B**

START

S201 — ACQUIRE FIRST IMAGE

S202 — GENERATE FIRST RESIDUAL IMAGE USING MACHINE LEARNING MODEL

S203 — GENERATE SECOND RESIDUAL IMAGE USING NONLINEAR PROCESSING BASED ON ABSOLUTE VALUE OF FIRST RESIDUAL IMAGE

S204 — GENERATE THIRD IMAGE BY CALCULATING SUM OF FOURTH IMAGE AND SECOND RESIDUAL IMAGE

END

## FIG. 6

FIG. 7A

FIG. 7B

FIG. 7C

300

301 — TRAINING APPARATUS

MEMORY — 311

COMMUNICATION UNIT — 312

ACQUIRING UNIT — 313

CALCULATOR — 314

UPDATER — 315

304

LENS APPARATUS

341 — OPTICAL SYSTEM

342 — MEMORY

343 — COMMUNICATION UNIT

303 — IMAGE PICKUP APPARATUS

331 — IMAGE SENSOR

332 — MEMORY

333 — COMMUNICATION UNIT

334 — CALCULATOR

335 — DISPLAY UNIT

BLUR CORRECTING APPARATUS — 302

MEMORY — 321

COMMUNICATION UNIT — 322

ACQUIRING UNIT — 323

CALCULATOR — 324

DISPLAY UNIT — 325

FIG. 8

300

301

302

304    303

FIG. 9

411 — CONCATENATION

401

402

CONVOLUTION — 428

CONVOLUTION — 421

ACTIVATION — 422

RESIDUAL BLOCK — 423

RESIDUAL BLOCK — 427

ACTIVATION — 426

CONVOLUTION — 425

412

CONCATENATION

REARRANGEMENT

415

413

REARRANGEMENT

424 — RESIDUAL BLOCK → ··· →

414

FIG. 10

FIG. 11

```
                    ┌─────────────┐
                    │    START    │
                    └──────┬──────┘
                           │
          S301      ┌──────▼──────────────────────┐
                    │    ACQUIRE FIRST IMAGE       │
                    └──────┬──────────────────────┘
                           │
          S302      ┌──────▼──────────────────────┐
                    │  ACQUIRE MODEL PARAMETERS    │
                    └──────┬──────────────────────┘
                           │
          S303      ┌──────▼──────────────────────┐
                    │     GENERATE FIRST MAP       │
                    └──────┬──────────────────────┘
                           │
          S304      ┌──────▼──────────────────────┐
                    │  GENERATE SECOND IMAGE USING │
                    │   MACHINE LEARNING MODEL     │
                    └──────┬──────────────────────┘
                           │
          S305      ┌──────▼──────────────────────┐
                    │  GENERATE FIRST RESIDUAL MAP BY │
                    │ CALCULATING DIFFERENCE BETWEEN │
                    │ SECOND IMAGE AND FOURTH IMAGE │
                    └──────┬──────────────────────┘
                           │
          S306      ┌──────▼──────────────────────┐
                    │ GENERATE FIRST WEIGHTED MAP BY │
                    │ NONLINEAR PROCESSING BASED ON │
                    │ ABSOLUTE VALUE OF FIRST RESIDUAL │
                    │            MAP               │
                    └──────┬──────────────────────┘
                           │
          S307      ┌──────▼──────────────────────┐
                    │   GENERATE THIRD IMAGE BY    │
                    │ WEIGHTED AVERAGE USING SECOND │
                    │  IMAGE, FOURTH IMAGE, AND FIRST │
                    │        WEIGHTED MAP          │
                    └──────┬──────────────────────┘
                           │
                    ┌──────▼──────┐
                    │     END     │
                    └─────────────┘
```

# FIG. 12

WEIGHT

1

0

ABSOLUTE VALUE
OF RESIDUE

FIG. 13A

FIG. 13B

Europäisches
Patentamt

European
Patent Office

Office européen
des brevets

# EUROPEAN SEARCH REPORT

Application Number

EP 24 20 1247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JIWON KIM ET AL: "Accurate Image Super-Resolution Using Very Deep Convolutional Networks", 2016 IEEE CONFERENCE ON COMPUTER VISION AND PATTERN RECOGNITION (CVPR), 1 June 2016 (2016-06-01), pages 1646-1654, XP055570210, DOI: 10.1109/CVPR.2016.182 ISBN: 978-1-4673-8851-1 | 1-6,9-18 | INV. G06T5/60 |
| A | * figure 1 * | 7,8 | |
| Y | JORDAN INTURRISI ET AL: "Piecewise Linear Units Improve Deep Neural Networks", ARXIV.ORG, CORNELL UNIVERSITY LIBRARY, 201 OLIN LIBRARY CORNELL UNIVERSITY ITHACA, NY 14853, 2 August 2021 (2021-08-02), XP091026002, * figure 1 * * section 2 * | 1-6,9-18 | |

TECHNICAL FIELDS SEARCHED (IPC)

G06T

The present search report has been drawn up for all claims

| Place of search | Date of completion of the search | Examiner |
|---|---|---|
| Munich | 15 February 2025 | Celik, Hasan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022536807 A